# EUROPEAN PATENT SPECIFICATION

(11) **EP 3 912 903 B1**
(45) Date of publication and mention of the grant of the patent: **04.09.2024**
(21) Application number: 21162616.3
(22) Date of filing: 15.03.2021
(51) Int. Cl.: B64C 3/28

(54) **STRUCTURAL COMPOSITE AIRFOILS WITH DIRECTLY COUPLED FRONT SPARS, AND RELATED METHODS**
STRUKTURELLE VERBUNDTRAGFLÄCHEN MIT DIREKT GEKOPPELTEN VORDEREN HOLMEN UND ZUGEHÖRIGE VERFAHREN
PROFILS AÉRODYNAMIQUES COMPOSITES STRUCTURAUX COMPORTANT DES LONGERONS AVANT DIRECTEMENT COUPLÉS ET PROCÉDÉS ASSOCIÉS

(30) Priority: 21.05.2020 US 202016880028
(43) Date of publication of application: 24.11.2021
(73) Proprietor: The Boeing Company, Arlington, VA 22202 (US)
(72) Inventor: GRUNER, Bryan, Chicago, IL 60606-2016 (US); SCHUPP, Peter, Chicago, IL 60606-2016 (US)
(74) Representative: Boult Wade Tennant LLP

(56) References cited:
- EP-A1- 3 360 778
- EP-A1- 3 409 580
- EP-A2- 1 176 089
- WO-A1-2014/170690
- US-A- 3 994 452
- US-A1- 2014 117 166

## Description

### FIELD

The present disclosure relates generally to structural composite airfoils and related methods.

### BACKGROUND

Aircraft, including fixed-wing aircraft and rotary-wing aircraft, employ a variety of aerodynamic control surfaces, such as ailerons, air brakes, elevators, flaps, rudders, slats, spoilers and the like. By manipulating one or more of the aerodynamic control surfaces, a pilot may control the lift generated by the aircraft, such as during takeoff, climbing, descending and landing, as well as the aircraft's orientation about its pitch, roll, and yaw axes. For example, the trailing edge of a wing of a fixed-wing aircraft typically includes one or more flaps, with the flaps being moveable between retracted and extended positions. At cruise, the flaps are typically maintained in a retracted position. When extended, the flaps increase the camber of the wing. Therefore, during takeoff, climbing, descending, or landing, the flaps may be extended, either partially or fully, to increase the maximum lift coefficient and effectively reduce the stalling speed of the aircraft. Said aerodynamic control surfaces are typically airfoils formed of composite materials, and thus are referred to herein as structural composite airfoils.

In general, a composite material is a structure that is formed from two or more constituent component materials with different physical and/or chemical properties that, when combined, produce a composite material having characteristics that are different than the characteristics of the individual components materials. As an example, one type of composite material is carbon fiber reinforced plastic ("CFRP"). CFRP generally includes one or more composite layers or plies laminated together to form a sheet, laminate or layup. Each of the composite layers or plies can include a reinforcement material and a matrix material. The matrix material surrounds, binds and supports the reinforcement material. The reinforcement material provides structural strength to the matrix material and the CFRP. The matrix material is generally a non-conductive polymer such as an epoxy resin. The reinforcement material generally consists of strands of carbon fiber, which are electrically conductive.

Structural composite airfoils, such as flaps, have an aerodynamic cross-sectional profile that is typically formed by connecting an upper skin to a lower skin proximate both the leading edge and the trailing edge of the structural composite airfoil. In conventional construction of inboard and outboard flaps, for example, a primary structural element of the flap is defined by the upper and lower skins being coupled to three spars that extend the width of the flap. The leading edge of the structural composite airfoil (which typically includes a bullnose shape), and the trailing edge (which is tapered to a thin cross-section) are typically outside of the primary structural element, forming respective secondary structural elements of the flap. Various fasteners and components (e.g., splice straps and/or nutplates) are used to secure the upper and lower skins to the spars and other structures that form the flap. Large numbers of fasteners can increase costs, manufacturing cycle time, and weight of the resulting assemblies. Accordingly, those skilled in the art continue research and development efforts directed to improving structural composite airfoils and the manufacturing thereof.

EP3409580 A1, in accordance with its abstract, states a closed-angle composite airfoil spar is provided for an airfoil assembly. The composite airfoil spar comprises a web portion having a thickness. The composite airfoil spar also comprises a flange portion having a thickness. The flange portion extends transverse to the web portion. The composite airfoil spar may further comprise a radius portion interconnecting the web and flange portions. The radius portion is an acceptable amount thinner relative to thickness of the web portion and thickness of the flange portion based on design requirements and material properties.

EP3360778 A1, in accordance with its abstract, states an aerodynamic control surface including an upper panel having an upper panel aft end portion, a lower panel having a lower panel aft end portion, mechanical fasteners connecting the upper panel aft end portion to the lower panel aft end portion, and a fairing having a fairing forward end portion and a fairing aft end portion, wherein the fairing forward end portion is connected to either the upper panel or the lower panel, and wherein the fairing aft end portion is connected to the other of the upper panel or the lower panel.

### SUMMARY

Structural composite airfoils and related methods of forming said structural composite airfoils as disclosed herein may reduce fastener counts, improve airfoil aerodynamic surfaces, and/or simplify manufacturing processes for structural composite airfoils.

There is disclosed herein a structural composite airfoil having a leading edge and a trailing edge, the structural composite airfoil comprising: a primary structural element extending from a leading edge region to a trailing edge region, wherein the leading edge region is adjacent the leading edge of the structural composite airfoil, wherein the primary structural element comprises: an upper skin panel; a lower skin panel; an internal volume defined between the upper skin panel and the lower skin panel; and a front C-channel spar comprising an upper flange coupled to the upper skin panel, wherein the front C-channel spar further comprises a lower flange coupled to the lower skin panel, wherein a first channel of the front C-channel spar faces the leading edge of the structural composite airfoil, wherein the upper flange forms a first angle with an elongated span of the front C-channel spar, wherein the lower flange forms a second angle with the elongated span, and wherein the first angle is acute; a secondary structural element defining the trailing edge of the structural composite airfoil; a leading edge skin panel defining the leading edge of the structural composite airfoil and positioned adjacent the leading edge region of the primary structural element, wherein a first end region of the leading edge skin panel is coupled to the upper flange of the front C-channel spar, wherein a second end region of the leading edge skin panel is coupled to the lower flange of the front C-channel spar, and wherein the leading edge skin panel has a bullnose shape; and a trailing edge closeout cover, wherein: a first cover end region of the trailing edge closeout cover is bonded to the lower skin panel, and the first cover end region of the trailing edge closeout cover is recessed into the lower skin panel; and a second cover end region of the trailing edge closeout cover comprises an integral wedge coupled to the upper skin panel.

The upper flange may be angled with respect to the elongated span to be complementary to the first end region of the leading edge skin panel.

The lower flange may be angled to be complementary to the second end region of the leading edge skin panel.

The upper skin panel may be abutted to the leading edge skin panel.

The lower skin panel may be abutted to the leading edge skin panel.

The leading edge skin panel may interface with the upper skin panel without a splice strap.

The leading edge skin panel may interface with the lower skin panel (36) without a/the splice strap.

The structural composite airfoil may further comprise a plurality of fasteners coupling the front C-channel spar to the upper skin panel and the lower skin panel, wherein each fastener of the plurality of fasteners is not blind, such that each fastener of the plurality of fasteners is accessible while the front C-channel spar is secured to the upper skin panel and the lower skin panel.

The upper skin panel may be coupled to the upper flange of the front C-channel spar without a nutplate.

The lower skin panel may be coupled to the lower flange of the front C-channel spar without a/the nutplate.

At least a portion of the upper skin panel may be core stiffened.

At least a portion of the lower skin panel may be core stiffened.

The upper skin panel may comprise fiberglass or carbon fiber.

The lower skin panel may comprise fiberglass or carbon fiber.

The structural composite airfoil may have a length, and wherein a position along the length may be defined by a percentage of the distance along the length from the leading edge.

The front C-channel spar may be positioned between 0% and 10% of the length away from the leading edge.

The front C-channel spar may be positioned at 5% or at about 5% of the length away from the leading edge.

A/the middle C-channel spar may be positioned between 20% and 40% of the length away from the leading edge.

A/the middle C-channel spar may be positioned at 30% or at about 30% of the length away from the leading edge.

A/the rear C-channel spar may be positioned between 40% and 70% of the length away from the leading edge, and/or between 50% and 60% of the length away from the leading edge.

A/the rear C-channel spar may be positioned at 55% or at about 55% of the length away from the leading edge.

The secondary structural element may comprise a duckbill closeout.

The secondary structural element may comprise a bonded closeout.

The secondary structural element may comprise a riveted closeout.

The lower skin panel may comprise a lower leading edge end and a lower trailing edge end, wherein the lower trailing edge end is opposite the lower leading edge end.

The lower trailing edge end may form an integral Z-spar.

The primary structural element may comprise an/the integral Z-spar.

The integral Z-spar may be formed by the lower skin panel within the trailing edge region of the primary structural element.

The integral Z-spar may comprise a joggle configured to receive a portion of a trailing edge closeout cover.

The integral Z-spar may comprise a first bend, a second bend, and a first Z-spar segment extending between the first bend and the second bend.

The first Z-spar segment may be perpendicular (or substantially perpendicular) to the lower skin panel and/or perpendicular (or substantially perpendicular) to the upper skin panel.

The integral Z-spar may further comprise a second Z-spar segment extending aft of the second bend, wherein the second Z-spar segment is coupled to the upper skin panel.

The second Z-spar segment may be adjacent an interior surface of the upper skin panel.

The second Z-spar segment may be coupled to the upper skin panel via a Z-spar fastener, wherein the Z-spar fastener is recessed into the upper skin panel, and wherein the Z-spar fastener extends through the second Z-spar segment.

A/the joggle of the integral Z-spar may be forward of the first bend.

There is also disclosed herein an aircraft comprising the structural composite airfoil as described above.

There is also disclosed herein a trailing edge flap for an aircraft comprising the structural composite airfoil as described above.

There is also disclosed herein a method of assembling a structural composite airfoil, the method comprising: coupling an upper skin panel to a front C-channel spar, wherein the structural composite airfoil extends from a leading edge to a trailing edge, wherein a first channel of the front C-channel spar faces the leading edge of the structural composite airfoil, wherein the front C-channel spar comprises an upper flange, a lower flange, and an elongated span extending between the upper flange and the lower flange, wherein the coupling the upper skin panel to the front C-channel spar comprises coupling the upper skin panel to the upper flange of the front C-channel spar , and wherein the upper flange forms an acute angle with the elongated span; coupling a lower skin panel to the front C-channel spar such that an internal volume is defined between the upper skin panel and the lower skin panel, wherein the upper skin panel, the lower skin panel, and the front C-channel spar together form at least a portion of a primary structural element of the structural composite airfoil; coupling a leading edge skin panel to the front C-channel spar, wherein the leading edge skin panel defines the leading edge of the structural composite airfoil, wherein the coupling the leading edge skin panel comprises coupling a first end region of the leading edge skin panel to the upper flange of the front C-channel spar, wherein the coupling the leading edge skin panel further comprises coupling a second end region of the leading edge skin panel to the lower flange of the front C-channel spar, wherein the leading edge skin panel has a bullnose shape; and coupling a trailing edge closeout cover to the lower skin panel, wherein a first cover end region of the trailing edge closeout cover is bonded to the lower skin panel, the first cover end region of the trailing edge closeout cover is recessed into the lower skin panel; and a second cover end region of the trailing edge closeout cover comprises an integral wedge coupled to the upper skin panel.

### BRIEF DESCRIPTION OF THE DRAWINGS

Fig. 1 is a schematic representation of an apparatus that may include one or more structural composite airfoils.
Fig. 2 is a schematic, side elevation representation of examples of structural composite airfoils.
Fig. 3 is a side elevation view of an integral Z-spar formed in a lower skin panel.
Fig. 4 is a side elevation view of an integral Z-spar formed in an upper skin panel.
Fig. 5 is a flowchart diagram representing disclosed methods of forming disclosed structural composite airfoils.

### DESCRIPTION

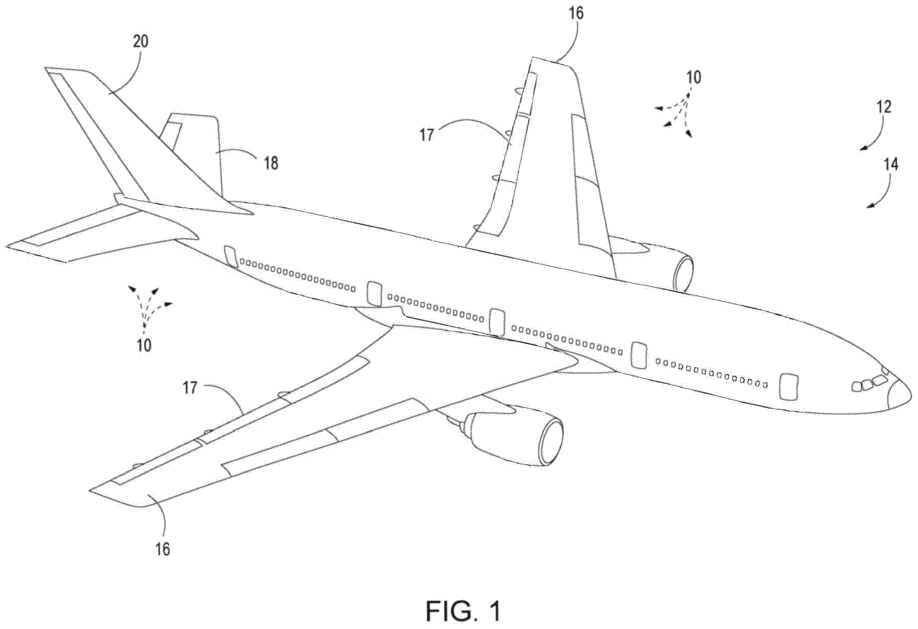

With reference to Fig. 1, one or more structural composite airfoils 10 may be included in an apparatus 12. Structural composite airfoils 10 may be utilized in many different industries and applications, such as the aerospace, automotive, architecture, marine, wind power generation, remote control aircraft, military, recreation, and/or motorsport industries. In Fig. 1, an example of apparatus 12 that may include one or more structural composite airfoils 10 generally is illustrated in the form of an aircraft 14. Aircraft 14 may take any suitable form, including commercial aircraft, military aircraft, or any other suitable aircraft. While Fig. 1 illustrates aircraft 14 in the form of a fixed-wing aircraft, other types and configurations of aircraft are within the scope of aircraft 14 according to the present disclosure, including (but not limited to) rotorcraft and helicopters.

Apparatus 12 (e.g., aircraft 14) may include one or more structural composite airfoils 10. As illustrative, non-exclusive examples, structural composite airfoils 10 may be utilized in wings 16 (e.g., flaps 17, which may be inboard or outboard flaps), though other components of aircraft 14, such as horizontal stabilizers 18, vertical stabilizers 20, and other components additionally or alternatively may include one or more structural composite airfoils 10. Other applications in aircraft 14 (or other apparatus 12) for structural composite airfoils 10 may include other wing control surfaces, ailerons, flaperons, air brakes, elevators, slats, spoilers, rudders, canards, and/or winglets. In other industries, examples of apparatus 12 including one or more structural composite airfoils 10 may include or be a portion of space satellites, transit vehicles, shipping containers, rapid transit vehicles, automobile bodies, propeller blades, turbine blades, and/or marine vehicles (e.g., sailboats), among others.

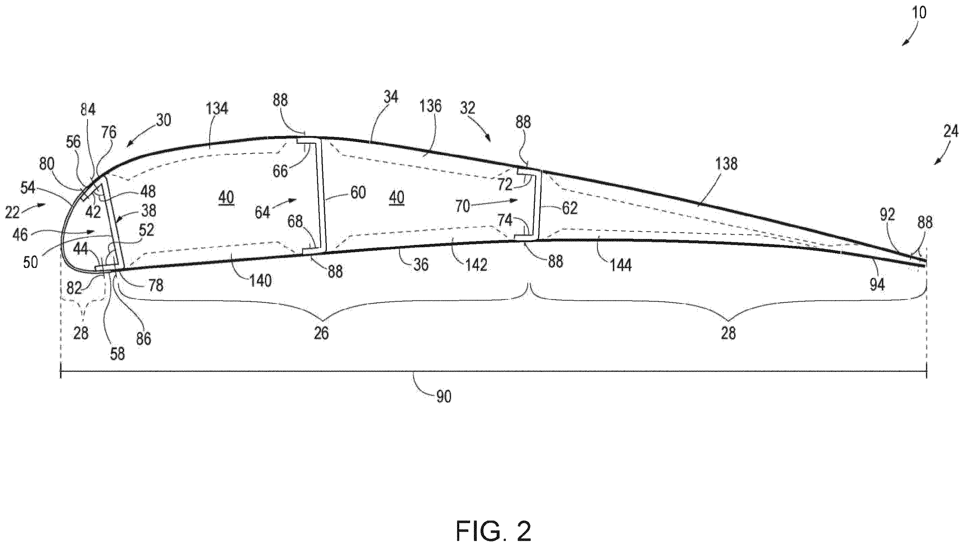

Fig. 2 provides illustrative, non-exclusive examples of structural composite airfoils 10 according to the present disclosure. In general, elements that are likely to be included are illustrated in solid lines, while elements that are optional are illustrated in dashed lines. However, elements that are shown in solid lines are not essential to all examples, and an element shown in solid lines may be omitted from a particular example without departing from the scope of the present disclosure.

Structural composite airfoil 10 has a leading edge 22 and a trailing edge 24, and generally includes a primary structural element 26 and a secondary structural element 28. As used herein, a "primary structural element" is an element or structure which carries flight, ground, or pressurization loads, and whose failure would reduce the structural integrity of the apparatus or assembly of which structural composite airfoil 10 is a part. As used herein, a "secondary structural element" is an element or structure whose failure does not affect the safety of the apparatus or assembly of which structural composite airfoil 10 is a part.

Primary structural element 26 extends from a leading edge region 30 to a trailing edge region 32. As shown in Fig. 2, leading edge region 30 is adjacent leading edge 22 of structural composite airfoil 10, but leading edge region 30 may not actually define leading edge 22. Leading edge region 30 may be said to be the region of primary structural element 26 that is closest to leading edge 22. Similarly, trailing edge region 32 may be said to be the region of primary structural element 26 that is closest to trailing edge 24, though trailing edge region 32 of primary structural element 26 does not define trailing edge 24 of structural composite airfoil 10. As used herein, a first element or structure is said to be "aft" of another element or structure if the first element or structure is positioned closer to trailing edge 24 than is the other element or structure. Similarly, as used herein, a first element or structure is said to be "forward" of another element or structure if the first element or structure is positioned closer to leading edge 22 than is the other element or structure.

Primary structural element 26 includes at least an upper skin panel 34, a lower skin panel 36, and a front C-channel spar 38. An internal volume 40 is defined between upper skin panel 34 and lower skin panel 36. Front C-channel spar 38 includes an upper flange 42 and a lower flange 44, with upper flange 42 being coupled to upper skin panel 34, and lower flange 44 being coupled to lower skin panel 36. A first channel 46 of front C-channel spar 38 faces leading edge 22 of structural composite airfoil 10. This arrangement of front C-channel spar 38 with respect to leading edge 22 may permit effective coupling of a leading edge skin panel 54 to upper skin panel 34 and lower skin panel 36 (via front C-channel spar 38) without forming any joggles in upper skin panel 34 or lower skin panel 36, thereby potentially reducing complexities in manufacturing upper skin panel 34 and lower skin panel 36.

Upper flange 42 forms a first angle 48 with an elongated span 50 of front C-channel spar, and lower flange 44 forms a second angle 52 with elongated span 50, with first channel 46 being defined by upper flange 42, lower flange 44, and elongated span 50. First angle 48 and/or second angle 52 may be acute angles in some examples of structural composite airfoil 10. Typical conventional airfoil constructions would involve such angles being greater than ninety degrees to facilitate removal of the part from the tool, and/or the channel of the front spar would be arranged facing the trailing edge of the airfoil. Examples of presently disclosed structural composite airfoils 10 may advantageously provide for interfacing between components or elements (e.g., interfacing leading edge skin panel 54 and upper flange 42) without forming joggles in upper skin panel 34 or lower skin panel 36 or utilizing splice straps, and/or may allow for a part count reduction by reducing or eliminating the number of splice straps, nutplates, and/or other fasteners used in assembling structural composite airfoils 10. Additionally or alternatively, upper flange 42 may be angled with respect to elongated span 50 so as to be complementary to a first end region 56 of leading edge skin panel 54. Similarly, lower flange 44 may be angled with respect to elongated span 50 so as to be complementary to a second end region 58 of leading edge skin panel 54.

Leading edge 22 of structural composite airfoil 10 is defined by leading edge skin panel 54, which is generally shaped to have a bullnose shape. Leading edge skin panel 54 may be positioned adjacent leading edge region 30 of primary structural element 26, though leading edge skin panel 54 may be a discrete part outside of, or distinct from, primary structural element 26. In other examples, leading edge skin panel 54 may be within leading edge region 30 of primary structural element 26 and/or define leading edge region 30 of primary structural element 26, such as in examples where primary structural element 26 extends to leading edge 22. Leading edge skin panel 54 is coupled to upper skin panel 34 and lower skin panel 36 via front C-channel spar 38. Specifically, first end region 56 of leading edge skin panel 54 is coupled to upper flange 42 of front C-channel spar 38, and second end region 58 of leading edge skin panel 54 is coupled to lower flange 44 of front C-channel spar 38. Because upper flange 42 of front C-channel spar 38 is coupled to leading edge skin panel 54 and to upper skin panel 34, front C-channel spar 38 effectively couples leading edge skin panel 54 to upper skin panel 34. In some examples, leading edge skin panel 54 does not overlap upper skin panel 34 (e.g., does not overlap an upper leading edge end 76 of upper skin panel 34) on upper flange 42. In a specific example, upper leading edge end 76 of upper skin panel 34 may be abutted to leading edge skin panel 54 (e.g., to first end region 56 of leading edge skin panel 54). In other examples, upper skin panel 34 may be coupled to upper flange 42 without contacting leading edge skin panel 54. Similarly, because lower flange 44 of front C-channel spar 38 is coupled to leading edge skin panel 54 and to lower skin panel 36, front C-channel spar 38 effectively couples leading edge skin panel 54 to lower skin panel 36. In some examples, leading edge skin panel 54 does not overlap lower skin panel 36 (e.g., does not overlap a lower leading edge end 78 of lower skin panel 36) on lower flange 44. In some examples, lower leading edge end 78 of lower skin panel 36 may be abutted to leading edge skin panel 54 (e.g., to second end region 58). In other examples, lower skin panel 36 may be coupled to lower flange 44 without contacting leading edge skin panel 54.

Trailing edge 24 of structural composite airfoil 10 is defined by secondary structural element 28. In various examples of structural composite airfoil 10, secondary structural element 28 may include a wedge closeout, a duckbill closeout, a bonded closeout, and/or a riveted closeout. Examples of suitable trailing edge closeouts are also disclosed in U.S. Patent No. 10,532,804, issued on January 14, 2020, and titled AERODYNAMIC CONTROL SURFACE AND ASSOCIATED TRAILING EDGE CLOSE-OUT METHOD.

Upper skin panel 34 generally extends from upper leading edge end 76 to an upper trailing edge end 92. Upper leading edge end 76 corresponds to the end of upper skin panel 34 that is closest to leading edge 22 of structural composite airfoil 10, and upper trailing edge end 92 corresponds to the end of upper skin panel 34 that is closest to trailing edge 24 of structural composite airfoil 10. Similarly, lower skin panel 36 generally extends from lower leading edge end 78 to a lower trailing edge end 94. Lower leading edge end 78 corresponds to the end of lower skin panel 36 that is closest to leading edge 22, and lower trailing edge end 94 corresponds to the end of lower skin panel 36 that is closest to trailing edge 24. As described above, upper leading edge end 76 and lower leading edge end 78 may be coupled to front C-channel spar 38. In some examples, upper trailing edge end 92 may be coupled to lower trailing edge end 94. Additionally or alternatively, upper trailing edge end 92 and/or lower trailing edge end 94 may form or define trailing edge 24 of structural composite airfoil 10.

Structural composite airfoil 10 may include one or more fasteners securing various components to each other. For example, a first fastener 80 may couple leading edge skin panel 54 (e.g., first end region 56 of leading edge skin panel 54) to upper flange 42 of front C-channel spar 38. In some examples, first fastener 80 is a plurality of first fasteners 80 spaced apart along the width of structural composite airfoil 10 (the width of the airfoil extending into/out of the page) to secure leading edge skin panel 54 to front C-channel spar 38 along first end region 56. Leading edge skin panel 54 may be configured to interface with upper skin panel 34 without any joggle formed in either panel, via coupling of both leading edge skin panel 54 and upper skin panel 34 to upper flange 42. Additionally or alternatively, structural composite airfoils 10 may be formed without a discrete splice strap joining leading edge skin panel 54 and upper skin panel 34, because upper flange 42 may be configured to effectively splice leading edge skin panel 54 and upper skin panel 34.

Similarly, a second fastener 82 may couple leading edge skin panel 54 (e.g., second end region 58 of leading edge skin panel 54) to lower flange 44 of front C-channel spar 38. In some examples, second fastener 82 is a plurality of second fasteners 82 spaced apart along the width of structural composite airfoil 10 (the width of the airfoil extending into/out of the page) to secure leading edge skin panel 54 to front C-channel spar 38 along second end region 58. Leading edge skin panel 54 may be configured to interface with lower skin panel 36 without any joggle formed in either panel, via coupling of both leading edge skin panel 54 and lower skin panel 36 to lower flange 44. Additionally or alternatively, structural composite airfoils 10 may be formed without a discrete splice strap joining leading edge skin panel 54 and lower skin panel 36, because lower flange 44 may be configured to effectively splice leading edge skin panel 54 and lower skin panel 36. First fastener 80 and second fastener 82 may be configured such that leading edge skin panel 54 may be selectively removable from primary structural element 26 by removing first fastener 80 and second fastener 82.

A third fastener 84 (or a plurality of third fasteners 84 spaced apart along the width of structural composite airfoil 10) may be positioned to couple upper skin panel 34 to upper flange 42 of front C-channel spar 38. Third fastener 84 generally couples upper leading edge end 76 of upper skin panel 34 to upper flange 42. A fourth fastener 86 (or plurality of fourth fasteners 86 spaced apart along the width of structural composite airfoil 10) may be positioned to couple lower skin panel 36 to lower flange 44 of front C-channel spar 38. Fourth fastener 86 generally couples lower leading edge end 78 of lower skin panel 36 to lower flange 44. Third fastener 84 and/or fourth fastener 86 may be accessible (e.g., not blind) even after primary structural element 26 is assembled. Additionally or alternatively, third fastener 84 and/or fourth fastener 86 may be permanent fasteners (e.g., hex drive bolts) that are secured without nutplates.

Structural composite airfoil 10 may further include a middle C-channel spar 60 and/or a rear C-channel spar 62, one or both of which may form part of primary structural element 26. In the example shown in Fig. 2, primary structural element 26 is defined by front C-channel spar 38, middle C-channel spar 60, rear C-channel spar 62, and the respective portions of upper skin panel 34 and lower skin panel 36 extending between front C-channel spar 38 and rear C-channel spar 62. In other examples of structural composite airfoil 10, primary structural element 26 may extend further towards leading edge 22 than illustrated in Fig. 2. For example, while primary structural element 26 may extend only between front C-channel spar 38 and rear C-channel spar 62 as noted above, in other examples, primary structural element 26 optionally may extend further forward such that primary structural element 26 also extends to and includes leading edge 22. Additionally or alternatively, primary structural element 26 may extend further towards trailing edge 24 than illustrated in Fig. 2. For example, primary structural element 26 may include at least a portion of structural composite airfoil 10 aft of rear C-channel spar 62.

In examples including middle C-channel spar 60, said middle C-channel spar 60 may include a second channel 64 facing leading edge 22. Middle C-channel spar 60 may be coupled to upper skin panel 34 and lower skin panel 36. For example, middle C-channel spar 60 may include a middle upper flange 66 coupled to upper skin panel 34. Additionally or alternatively, middle C-channel spar 60 may include a middle lower flange 68 coupled to lower skin panel 36. Middle C-channel spar 60 is positioned aft of front C-channel spar 38.

In examples including rear C-channel spar 62, said rear C-channel spar 62 may include a third channel 70 facing leading edge 22. Rear C-channel spar 62 may be coupled to upper skin panel 34 and lower skin panel 36. For example, rear C-channel spar 62 may include a rear upper flange 72 coupled to upper skin panel 34. Additionally or alternatively, rear C-channel spar 62 may include a rear lower flange 74 coupled to lower skin panel 36. Rear C-channel spar 62 is positioned aft of front C-channel spar 38. In examples of structural composite airfoil 10 including middle C-channel spar 60 and rear C-channel spar 62, rear C-channel spar 62 is positioned aft of middle C-channel spar 60.

A plurality of other fasteners 88 may be utilized to couple upper skin panel 34 to middle C-channel spar 60 (e.g., middle upper flange 66) and/or to rear C-channel spar 62 (e.g., rear upper flange 72). Similarly, one or more fasteners 88 may be used to couple lower skin panel 36 to middle C-channel spar 60 (e.g., middle lower flange 68) and/or to rear C-channel spar 62 (e.g., rear lower flange 74). Additionally or alternatively, one or more fasteners 88 may be used to couple upper trailing edge end 92 to lower trailing edge end 94.

Each of upper skin panel 34 and lower skin panel 36 may be a composite panel formed of a plurality of layers (plies) of a fiber-reinforced polymer that are laminated together. For example, upper skin panel 34 and lower skin panel 36 may be formed of carbon fiber reinforced polymer material or fiberglass reinforced polymer material. In other examples, upper skin panel 34 and/or lower skin panel 36 may be a metallic material, a polymer, or other suitable material.

In some examples, at least a portion of upper skin panel 34 may be core stiffened. As used herein, "core stiffened" refers to skin panels having at least a first skin and a low-density core material coupled to the skin. Core stiffened materials optionally include a second skin, with the core material sandwiched between the first and second skins to form a sandwich panel. Suitable materials for forming core stiffened portions are well known in the art, and include honeycomb core materials and metallic core materials, though other core materials are within the scope of the present disclosure. For example, upper skin panel 34 may include a first upper core stiffened portion 134, a second upper core stiffened portion 136, and a third upper core stiffened portion 138. First upper core stiffened portion 134 may be positioned between front C-channel spar 38 and middle C-channel spar 60, second upper core stiffened portion 136 may be positioned between middle C-channel spar 60 and rear C-channel spar 62, and/or third upper core stiffened portion 138 may be positioned between rear C-channel spar 62 and upper trailing edge end 92. One or more of upper core stiffened portions 134, 136, 138 may be tapered, such as in areas of the respective section near C-channel spar 38, 60, and/or 62. For example, upper core stiffened portion 134, 136, and/or 138 may have a height or thickness extending downward from upper skin panel 34 towards lower skin panel 36, with said height or thickness decreasing in the vicinity of one or more of the C-channel spars 38, 60, and/or 62, thereby forming the taper. In the example of Fig. 2, the thickness of first upper core stiffened portion 134 is tapered adjacent front C-channel spar 38 and adjacent middle C-channel spar 60, the thickness of second upper core stiffened portion 136 is tapered adjacent middle C-channel spar 60 and rear C-channel spar 62, and the thickness of third upper core stiffened portion 138 is tapered adjacent rear C-channel spar 62 and adjacent trailing edge 24. In other examples, the height or thickness of one or more upper core stiffened portions 134, 136, and/or 138 may be constant or substantially constant, rather than tapering where the respective upper core stiffened portion 134, 136, and/or 138 meets the respective C-channel spar 38, 60, 62. In some examples, one or more of upper core stiffened portions 134, 136, and/or 138 may abut a respective C-channel spar 38, 60, and/or 62. While upper skin panel 34 as shown in Fig. 2 includes three distinct upper core stiffened portions 134, 136, 138, in other examples, upper skin panel 34 may be core stiffened along its entire length, along a greater or lesser portion of its length, and/or may include more or fewer discrete upper core stiffened sections than is shown in Fig. 2.

Additionally or alternatively, at least a portion of lower skin panel 36 may be core stiffened. For example, lower skin panel 36 includes a first lower core stiffened portion 140, a second lower core stiffened portion 142, and a third lower core stiffened portion 144. First lower core stiffened portion 140 may be positioned between front C-channel spar 38 and middle C-channel spar 60, second lower core stiffened portion 142 may be positioned between middle C-channel spar 60 and rear C-channel spar 62, and/or third lower core stiffened portion 138 may be positioned between rear C-channel spar 62 and lower trailing edge end 94. One or more of lower core stiffened portions 140, 142, 144 may be tapered, such as in areas of the respective section near C-channel spar 38, 60, and/or 62. For example, lower core stiffened portion 140, 142, and/or 144 may have a height or thickness extending upward from lower skin panel 36 towards upper skin panel 34, with said height or thickness decreasing in the vicinity of one or more of the C-channel spars 38, 60, and/or 62, thereby forming the taper. In the example of Fig. 2, the thickness of first lower core stiffened portion 140 is tapered adjacent front C-channel spar 38 and adjacent middle C-channel spar 60, the thickness of second lower core stiffened portion 142 is tapered adjacent middle C-channel spar 60 and rear C-channel spar 62, and the thickness of third lower core stiffened portion 144 is tapered adjacent rear C-channel spar 62 and adjacent trailing edge 24. In other examples, the height or thickness of one or more lower core stiffened portions 140, 142, and/or 144 may be constant or substantially constant, rather than tapering where the respective lower core stiffened portion 140, 142, and/or 144 meets the respective C-channel spar 38, 60, 62. In some examples, one or more of lower core stiffened portions 140, 142, and/or 144 may abut a respective C-channel spar 38, 60, and/or 62. While lower skin panel 36 as shown in Fig. 2 includes three distinct lower core stiffened portions 140, 142, 144, in other examples, lower skin panel 36 may be core stiffened along its entire length, may be core stiffened along a greater or lesser portion of its length, and/or may include more or fewer discrete lower core stiffened sections than is shown in Fig. 2.

Structural composite airfoil 10 has a length 90, which may also be referred to herein as a chord length 90, and a position along length 90 may be defined in terms of a percentage of the distance along length 90 from leading edge 22. In these terms, front C-channel spar 38 may be positioned between 0% and 10% of length 90 away from leading edge 22. In some examples, front C-channel spar 38 is positioned at 5% of length 90 away from leading edge 22 (or at about 5% of length 90 away from leading edge 22). Front C-channel spar 38 may be positioned as far forward as practical for integration in some examples. Additionally or alternatively, middle C-channel spar 60 may be positioned between 20% and 40% of length 90 away from leading edge 22, such as at 30% of length 90 away from leading edge 22 (or about 30% of length 90 away from leading edge 22). In some examples, middle C-channel spar 60 may be positioned for balancing torsional capability within primary structural element 26 on either side of middle C-channel spar 60. Additionally or alternatively, rear C-channel spar 62 may be positioned between 40% and 70% of length 90 away from leading edge 22, and/or between 50% and 60% of length 90 away from leading edge 22. In some examples, rear C-channel spar 62 may be positioned at 55% of length 90 away from leading edge 22 (or about 55% of length 90 away from leading edge 22). In some examples, rear C-channel spar 62 may be positioned as far aft as practical for integration.

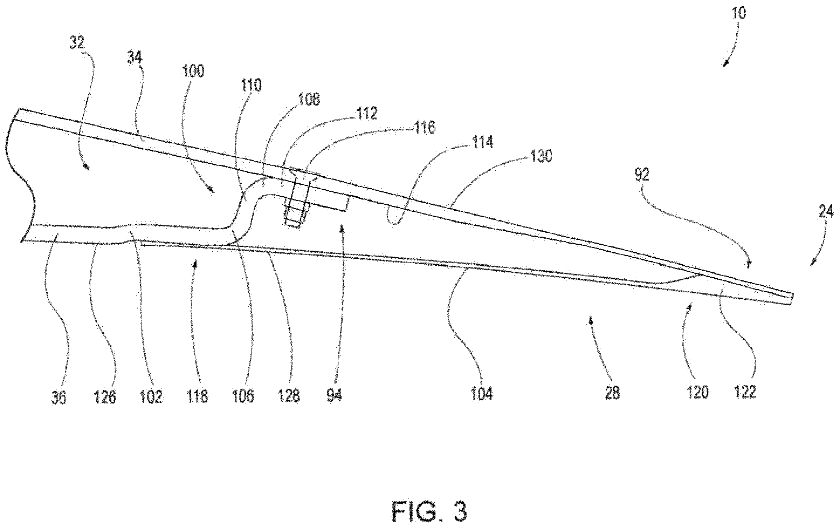

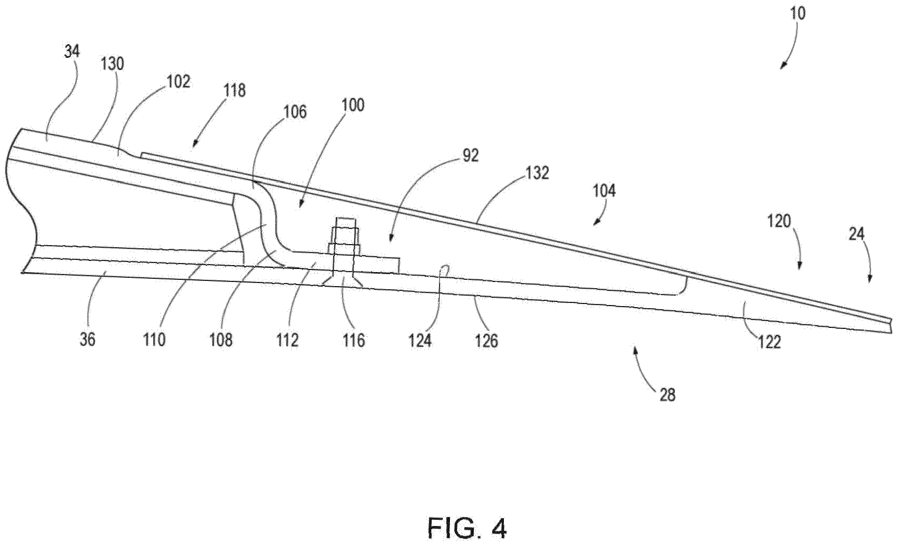

Some examples of structural composite airfoil 10 may include an integral Z-spar 100, which may be a part of primary structural element 26, with elements aft of integral Z-spar 100 being part of secondary structural element 28 in some examples. Thus, positioning integral Z-spar 100 aft of middle C-channel spar 60 and/or rear C-channel spar 62 (or in lieu of one or both of these spars) may lengthen, or extend, the length of primary structural element 26, and/or may increase the percentage of length 90 of structural composite airfoil 10 that corresponds to primary structural element 26. In some examples, integral Z-spar 100 may be formed within trailing edge region 32 of primary structural element 26. Figs. 3-4 illustrate examples of such integral Z-spars 100, with Fig. 3 illustrating an example of integral Z-spar 100 formed in lower skin panel 36, and Fig. 4 illustrating an example of integral Z-spar 100 formed in upper skin panel 34. Integral Z-spar 100 is generally positioned adjacent trailing edge 24 of structural composite airfoil 10, such as by being positioned at least 80% of length 90 away from leading edge 22. In some examples, integral Z-spar 100 may be positioned between 80-95% of length 90 away from leading edge 22.

With reference to Fig. 3, integral Z-spar 100 may be formed in lower trailing edge end 94 of lower skin panel 36. Integral Z-spar 100 may include a first bend 106, a second bend 108, and a first Z-spar segment 110 extending between first bend 106 and second bend 108. In some examples, first Z-spar segment 110 may be at least perpendicular or at least substantially perpendicular to lower skin panel 36 and/or upper skin panel 34. In some examples, first Z-spar segment 110 may form an angle with lower skin panel 36 that is greater than 90 degrees, and/or greater than 100 degrees. Additionally or alternatively, first Z-spar segment 110 may form an angle with upper skin panel 34 that is greater than 90 degrees, and/or greater than 100 degrees. Integral Z-spar 100 may further include a second Z-spar segment 112 extending aft of second bend 108. Second Z-spar segment 112 may be coupled to upper skin panel 34, as shown in Fig. 3. In the example shown in Fig. 3, second Z-spar segment 112 is positioned adjacent an interior surface 114 of upper skin panel 34. A Z-spar fastener 116 may couple integral Z-spar 100 to upper skin panel 34. In some examples, Z-spar fastener 116 is recessed into upper skin panel 34 (e.g., such that Z-spar fastener 116 is at least substantially flush or sub flush with an upper panel surface 130 of upper skin panel 34) and extends through upper skin panel 34 and second Z-spar segment 112 to couple integral Z-spar 100 to upper skin panel 34.

Integral Z-spar 100 may include a Z-spar joggle 102 in lower skin panel 36 that may be configured to receive a portion of a trailing edge closeout cover 104, which may at least partially define secondary structural element 28 and/or trailing edge 24 of structural composite airfoil 10. Z-spar joggle 102 is effectively a small shift in lower skin panel 36 upwards toward upper skin panel 34, and generally is positioned forward of first bend 106. A first cover end region 118 of trailing edge closeout cover 104 may be bonded to lower skin panel 36, as shown in Fig. 3. Additionally or alternatively, first cover end region 118 may be riveted or otherwise fastened or coupled to lower skin panel 36. To create a smooth surface at the interface and improve aerodynamic performance, first cover end region 118 may be slightly recessed into lower skin panel 36, such as via Z-spar joggle 102, as shown in Fig. 3. Z-spar joggle 102 may be tailored to create a greater or smaller recess in lower skin panel 36, depending on the thickness of first cover end region 118, such that a lower panel surface 126 of lower skin panel 36 is flush or substantially flush with a lower cover surface 128 of trailing edge closeout cover 104 within first cover end region 118. In other words, Z-spar joggle 102 may be larger to create a bigger recess to receive and engage with a given trailing edge closeout cover 104 having a thicker first cover end region 118, whereas Z-spar joggle 102 may be smaller to create a smaller recess to receive and engage with a different given trailing edge closeout cover 104 having a thinner first cover end region 118. Any gaps remaining at the interface of Z-spar joggle 102 and first cover end region 118 (or elsewhere on structural composite airfoil 10) may be filled with a sealant, a filler material, and/or a resin, and then smoothed.

A second cover end region 120 of trailing edge closeout cover 104 may include an integral wedge 122 that may be coupled (e.g., bonded and/or coupled via one or more fasteners) to upper skin panel 34, as shown in Fig. 3. Alternatively, integral wedge 122 may be integrally formed with upper skin panel 34. In still other examples, integral wedge 122 may be a discrete component separate from trailing edge closeout cover 104 and separate from upper skin panel 34, and which may be bonded or otherwise coupled to upper skin panel 34 and/or trailing edge closeout cover 104. For example, integral wedge 122 may be formed by building up plies of material, molding, and/or by machining a mating face profile to mate with upper skin panel 34.

With reference to Fig. 4, integral Z-spar 100 may be formed in upper trailing edge end 92 of upper skin panel 34. In the example shown in Fig. 4, second Z-spar segment 112 is coupled to lower skin panel 36, and is positioned adjacent an interior surface 124 of lower skin panel 36. Z-spar fastener 116 couples integral Z-spar 100 to lower skin panel 36, with Z-spar fastener 116 being recessed into lower skin panel 36 (e.g., such that Z-spar fastener 116 is at least flush or at least substantially flush or sub flush with lower panel surface 126 of lower skin panel 36) and extending through lower skin panel 36 and second Z-spar segment 112 to couple integral Z-spar 100 to lower skin panel 36.

In Fig. 4, integral Z-spar 100 includes Z-spar joggle 102 in upper skin panel 34 that is configured to receive a portion of trailing edge closeout cover 104, with Z-spar joggle 102 being positioned forward of first bend 106. Z-spar joggle 102 is effectively a small shift in upper skin panel 34 toward lower skin panel 36. First cover end region 118 of trailing edge closeout over 104 is bonded to upper skin panel 34 instead of lower skin panel 36 in this example. Additionally or alternatively, first cover end region 118 may be riveted or otherwise fastened or coupled to upper skin panel 34. To create a smooth surface at the interface and improve aerodynamic performance, first cover end region 118 may be slightly recessed into upper skin panel 34, such as via Z-spar joggle 102, as shown in Fig. 4. Z-spar joggle 102 may be tailored to create a greater or smaller recess in upper skin panel 34, depending on the thickness of first cover end region 118, such that an upper panel surface 130 of upper skin panel 34 is flush or substantially flush with an upper cover surface 132 of trailing edge closeout cover 104 within first cover end region 118. In other words, Z-spar joggle 102 may be larger to create a bigger recess to receive and engage with a given trailing edge closeout cover 104 having a thicker first cover end region 118, whereas Z-spar joggle 102 may be smaller to create a smaller recess to receive and engage with a different given trailing edge closeout cover 104 having a thinner first cover end region 118.

Second cover end region 120 of trailing edge closeout cover 104 may include integral wedge 122 that may be coupled (e.g., bonded and/or coupled via one or more fasteners) to lower skin panel 36. Alternatively, and as shown in Fig. 4, integral wedge 122 may be integrally formed with lower skin panel 36. In still other examples, integral wedge 122 may be a discrete component separate from trailing edge closeout cover 104 and separate from lower skin panel 36, and which may be bonded or otherwise coupled to lower skin panel 36 and/or trailing edge closeout cover 104. Integral wedge 122 may be formed, for example, by building up plies of material, molding, and/or by machining a mating face profile to mate with lower skin panel 36.

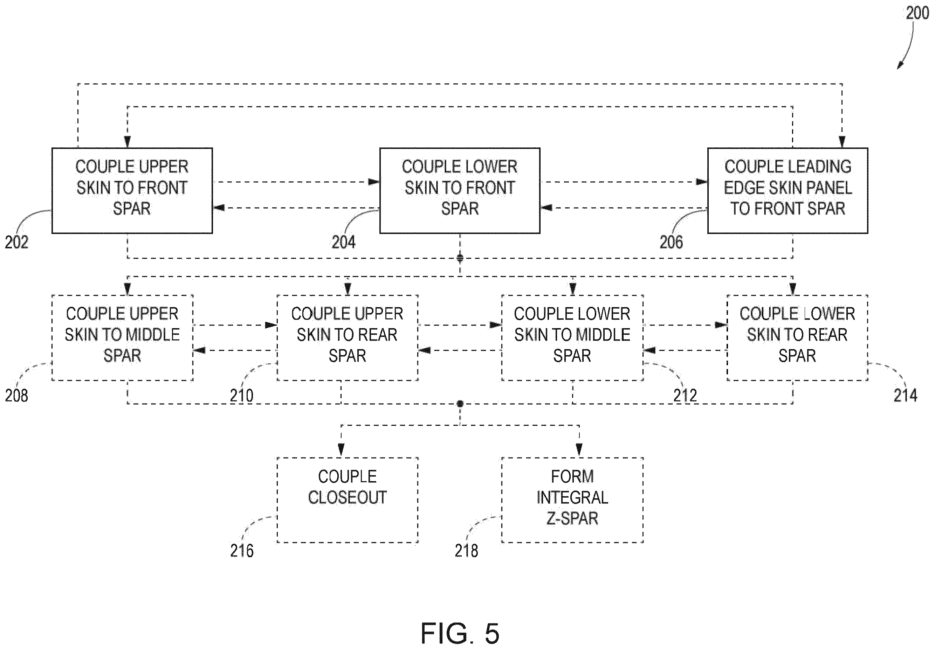

Fig. 5 schematically provides a flowchart that represents illustrative, non-exclusive examples of methods 200 according to the present disclosure. In Fig. 5, some steps are illustrated in dashed boxes indicating that such steps may be optional or may correspond to an optional version of a method according to the present disclosure. That said, not all methods 200 according to the present disclosure are required to include the steps illustrated in solid boxes. The methods 200 and steps illustrated in Fig. 5 are not limiting and other methods and steps are within the scope of the present disclosure, including methods having greater than or fewer than the number of steps illustrated, as understood from the discussions herein.

Methods 200 generally include coupling an upper skin panel (e.g., upper skin panel 34) to a front C-channel spar (e.g., front C-channel spar 38), at 202, and coupling a lower skin panel (e.g., lower skin panel 36) to the front C-channel spar, at 204. Coupling the upper skin panel to the front C-channel spar at 202 generally includes coupling the upper skin panel to an upper flange (e.g., upper flange 42) of the front C-channel spar. Similarly, coupling the lower skin panel to the front C-channel spar at 204 generally includes coupling the lower skin panel to a lower flange (e.g., lower flange 44) of the front C-channel spar. As compared to conventional techniques, coupling the upper skin panel at 202 and/or coupling the lower skin panel at 204 may be performed with a reduced number of nutplates or other fastening components. Additionally or alternatively, coupling the upper skin panel at 202 and/or coupling the lower skin panel at 204 may be performed without the use of splice straps. Reducing the number of fasteners or fastening components may reduce the weight of the resulting structural composite airfoil, reduce manufacturing costs, and/or reduce manufacturing processing time.

Methods 200 also include coupling a leading edge skin panel (e.g., leading edge skin panel 54) to the front C-channel spar, at 206. Coupling the leading edge skin panel at 206 generally includes coupling a first end region of the leading edge skin panel (e.g., first end region 56) to the upper flange of the front C-channel spar, and coupling a second end region of the leading edge skin panel (e.g., second end region 58) to the lower flange of the front C-channel spar. Coupling the leading edge skin panel at 206 may be performed without overlapping the upper skin panel and the leading edge skin panel on the upper flange of the front C-channel spar. Similarly, coupling the leading edge skin panel at 206 may be performed without overlapping the lower skin panel and the leading edge skin panel on the lower flange of the front C-channel spar. Coupling the leading edge skin panel at 206 may include coupling the leading edge skin panel without the use of splice straps, such that the leading edge skin panel may be directly coupled to the front C-channel spar. In some methods 200, coupling the leading edge skin panel at 206 includes abutting the first end region of the leading edge skin panel and the upper skin panel (e.g., upper leading edge end 76 of upper skin panel 34), which may include forming a lap joint or splice joint between the two. Additionally or alternatively, coupling the leading edge skin panel at 206 may include abutting the second end region of the leading edge skin panel and the lower skin panel (e.g., lower leading edge end 78 of lower skin panel 36) and/or forming a lap joint or splice joint therebetween.

In some examples, method 200 includes coupling the upper skin panel to a middle C-channel spar (e.g., middle C-channel spar 60) at 208, coupling the upper skin panel to a rear C-channel spar (e.g., rear C-channel spar 62) at 210, coupling the lower skin panel to the middle C-channel spar at 212, and/or coupling the lower skin panel to the rear C-Channel spar at 214. Additionally or alternatively, methods 200 may include coupling a secondary structural element (e.g., secondary structural element 28), such as a closeout, to the upper skin panel (e.g., upper trailing edge end 92) and/or to the lower skin panel (e.g., lower trailing edge end 94), at 216. Additionally or alternatively, methods 200 may include forming an integral Z-spar (e.g., integral Z-spar 100) in the lower skin panel or upper skin panel, at 218.

As used herein, the terms "selective" and "selectively," when modifying an action, movement, configuration, or other activity of one or more components or characteristics of an apparatus, mean that the specific action, movement, configuration, or other activity is a direct or indirect result of user manipulation of an aspect of, or one or more components of, the apparatus.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, or A, B, and C together, and optionally any of the above in combination with at least one other entity.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar components, features, details, structures, embodiments, and/or methods, are limited only by the appended claims.

## Claims

1. A structural composite airfoil (10) having a leading edge (22) and a trailing edge (24), the structural composite airfoil comprising:
a primary structural element (26) extending from a leading edge region (30) to a trailing edge region (32), wherein the leading edge region is adjacent the leading edge of the structural composite airfoil, wherein the primary structural element comprises:
an upper skin panel (34);
a lower skin panel (36);
an internal volume (40) defined between the upper skin panel and the lower skin panel; and
a front C-channel spar (38) comprising an upper flange (42) coupled to the upper skin panel, wherein the front C-channel spar further comprises a lower flange (44) coupled to the lower skin panel, wherein a first channel (46) of the front C-channel spar faces the leading edge of the structural composite airfoil, wherein the upper flange forms a first angle (48) with an elongated span (50) of the front C-channel spar, wherein the lower flange forms a second angle (52) with the elongated span, and wherein the first angle is acute;
a secondary structural element (28) defining the trailing edge of the structural composite airfoil;
a leading edge skin panel (54) defining the leading edge of the structural composite airfoil and positioned adjacent the leading edge region of the primary structural element, wherein a first end region (56) of the leading edge skin panel is coupled to the upper flange of the front C-channel spar, wherein a second end region (58) of the leading edge skin panel is coupled to the lower flange of the front C-channel spar, and wherein the leading edge skin panel has a bullnose shape; and
a trailing edge closeout cover (104), wherein:
a first cover end region (118) of the trailing edge closeout cover is bonded to the lower skin panel, and the first cover end region of the trailing edge closeout cover is recessed into the lower skin panel; and
a second cover end region (120) of the trailing edge closeout cover comprises an integral wedge (122) coupled to the upper skin panel.

2. The structural composite airfoil according to claim 1, wherein the leading edge skin panel does not overlap the upper skin panel on the upper flange of the front C-channel spar, and wherein the leading edge skin panel does not overlap the lower skin panel on the lower flange of the front C-channel spar.

3. The structural composite airfoil according to claim 1 or 2, further comprising:
a first fastener (80) coupling the leading edge skin panel to the upper flange of the front C-channel spar;
a second fastener (82) coupling the leading edge skin panel to the lower flange of the front C-channel spar;
a third fastener (84) coupling the upper skin panel to the upper flange of the front C-channel spar, wherein the third fastener is not blind, such that it is accessible when the primary structural element is assembled; and
a fourth fastener (86) coupling the lower skin panel to the lower flange of the front C-channel spar, wherein the fourth fastener is not blind, such that it is accessible when the primary structural element is assembled.

4. The structural composite airfoil according to any of claims 1-3, wherein the leading edge skin panel interfaces with the upper skin panel without any joggle, and wherein the leading edge skin panel interfaces with the lower skin panel without any joggle.

5. The structural composite airfoil according to any of claims 1-4, wherein the structural composite airfoil is a trailing edge flap, an aileron, a flaperon, an air brake, an elevator, a slat, a spoiler, a canard, a rudder, and/or a winglet.

6. The structural composite airfoil according to any of claims 1-5, wherein the secondary structural element comprises a wedge closeout.

7. The structural composite airfoil according to any of claims 1-6, wherein:
the lower skin panel comprises a lower leading edge end (78) and a lower trailing edge end (94);
the lower trailing edge end is opposite the lower leading edge end;
the lower leading edge end is coupled to the front C-channel spar; and, optionally,
the lower trailing edge end is coupled to an upper trailing edge end (92) of the upper skin panel.

8. The structural composite airfoil according to claim 7, wherein:
an integral Z-spar (100) is formed in the lower trailing edge end, the Z-spar (100) including a Z-spar joggle (102); and
the first cover end region of the trailing edge closeout cover is recessed into the lower skin panel via the Z-spar joggle.

9. The structural composite airfoil according to any preceding claim, wherein the integral wedge is bonded and/or coupled via one or more fasteners to the upper skin panel.

10. The structural composite airfoil according to any of claims 1-6, wherein:
the upper skin panel comprises an upper leading edge end (76) and an upper trailing edge end (92);
the upper trailing edge end is opposite the upper leading edge end;
the upper leading edge end is coupled to the front C-channel spar; and, optionally,
the upper trailing edge end is coupled to an integral wedge (122) of a trailing edge closeout cover (104).

11. The structural composite airfoil according to any of claims 1-10, wherein the second angle is acute.

12. The structural composite airfoil according to any of claims 1-11, wherein the front C-channel spar is directly coupled to the upper skin panel and the lower skin panel without splice straps or nutplates.

13. The structural composite airfoil according to any of claims 1-12, wherein the primary structural element further comprises:
a middle C-channel spar (60) coupled to the upper skin panel and the lower skin panel, wherein a second channel (64) of the middle C-channel spar faces the leading edge of the structural composite airfoil, and wherein the middle C-channel spar is positioned aft of the front C-channel spar; and
a rear C-channel spar (62) coupled to the upper skin panel and the lower skin panel, wherein a third channel (70) of the rear C-channel spar faces the leading edge of the structural composite airfoil, and wherein the rear C-channel spar is positioned aft of the middle C-channel spar.

14. An aircraft comprising the structural composite airfoil according to any of claims 1-13.

15. A method of assembling a structural composite airfoil (10), the method comprising:
coupling an upper skin panel (34) to a front C-channel spar (38), wherein the structural composite airfoil extends from a leading edge (22) to a trailing edge (24), wherein a first channel (46) of the front C-channel spar faces the leading edge of the structural composite airfoil, wherein the front C-channel spar comprises an upper flange (42), a lower flange (44), and an elongated span (50) extending between the upper flange and the lower flange, wherein the coupling the upper skin panel to the front C-channel spar comprises coupling the upper skin panel to the upper flange of the front C-channel spar, and wherein the upper flange forms an acute angle with the elongated span;
coupling a lower skin panel (36) to the front C-channel spar such that an internal volume (40) is defined between the upper skin panel and the lower skin panel, wherein the upper skin panel, the lower skin panel, and the front C-channel spar together form at least a portion of a primary structural element (26) of the structural composite airfoil;
coupling a leading edge skin panel (54) to the front C-channel spar, wherein the leading edge skin panel defines the leading edge of the structural composite airfoil, wherein the coupling the leading edge skin panel comprises coupling a first end region (56) of the leading edge skin panel to the upper flange of the front C-channel spar, wherein the coupling the leading edge skin panel further comprises coupling a second end region (58) of the leading edge skin panel to the lower flange of the front C-channel spar, wherein the leading edge skin panel has a bullnose shape; and
coupling a trailing edge closeout cover (104) to the lower skin panel, wherein a first cover end region (118) of the trailing edge closeout cover is bonded to the lower skin panel, the first cover end region of the trailing edge closeout cover is recessed into the lower skin panel, and a second cover end region (120) of the trailing edge closeout cover comprises an integral wedge (122) coupled to the upper skin panel.

## Patentansprüche

1. Strukturelle Verbundtragfläche (10) mit einer Vorderkante (22) und einer Hinterkante (24), wobei die strukturelle Verbundtragfläche umfasst:
ein primäres Strukturelement (26), das sich von einem Vorderkantenbereich (30) zu einem Hinterkantenbereich (32) erstreckt, wobei der Vorderkantenbereich an die Vorderkante der strukturellen Verbundtragfläche angrenzt, wobei das primäre Strukturelement umfasst:
eine obere Hautplatte (34);
eine untere Hautplatte (36);
ein Innenvolumen (40), das zwischen der oberen Hautplatte und der unteren Hautplatte definiert ist; und
einen vorderen C-förmigen Holm (38), der einen oberen Flansch (42) umfasst, der mit der oberen Hautplatte verbunden ist, wobei der vordere C-förmige Holm außerdem einen unteren Flansch (44) aufweist, der mit der unteren Hautplatte verbunden ist, wobei ein erster Kanal (46) des vorderen C-förmigen Holms der Vorderkante der strukturellen Verbundtragfläche zugewandt ist, wobei der obere Flansch einen ersten Winkel (48) mit einem langgestreckten Abschnitt (50) des vorderen C-förmigen Holms bildet, wobei der untere Flansch einen zweiten Winkel (52) mit dem langgestreckten Abschnitt bildet, und wobei der erste Winkel spitz ist;
ein sekundäres Strukturelement (28), das die Hinterkante der strukturellen Verbundtragfläche definiert;
eine Vorderkanten-Hautplatte (54), die die Vorderkante der strukturellen Verbundtragfläche definiert und angrenzend an den Vorderkantenbereich des primären Strukturelements angeordnet ist, wobei ein erster Endbereich (56) der Vorderkanten-Hautplatte mit dem oberen Flansch des vorderen C-förmigen Holms verbunden ist, wobei ein zweiter Endbereich (58) der Vorderkanten-Hautplatte mit dem unteren Flansch des vorderen C-förmigen Holms verbunden ist und wobei die Vorderkanten-Hautplatte eine abgerundete Form aufweist; und
eine Hinterkantenabschlussabdeckung (104), wobei
ein erster Abdeckungsendbereich (118) der Hinterkantenabschlussabdeckung mit der unteren Hautplatte verbunden ist und der erste Abdeckungsendbereich der Hinterkantenabschlussabdeckung in die untere Hautplatte eingelassen ist; und
ein zweiter Endbereich (120) der Hinterkantenabschlussabdeckung einen integralen Keil (122) umfasst, der mit der oberen Hautplatte verbunden ist.

2. Strukturelle Verbundtragfläche nach Anspruch 1, bei der die Vorderkanten-Hautplatte mit der oberen Hautplatte am oberen Flansch des vorderen C-förmigen Holms nicht überlappt und bei der die Vorderkanten-Hautplatte mit der unteren Hautplatte am unteren Flansch des vorderen C-förmigen Holms nicht überlappt.

3. Strukturelle Verbundtragfläche nach Anspruch 1 oder 2, die ferner umfasst:
ein erstes Befestigungselement (80), das die Vorderkanten-Hautplatte mit dem oberen Flansch des vorderen C-förmigen Holms verbindet;
ein zweites Befestigungselement (82), das die Vorderkanten-Hautplatte mit dem unteren Flansch des vorderen C-förmigen Holms verbindet;
ein drittes Befestigungselement (84), das die obere Hautplatte mit dem oberen Flansch des vorderen C-förmigen Holms verbindet, wobei die dritte Befestigung nicht blind ist, so dass sie zugänglich ist, wenn das primäre Strukturelement montiert ist; und
ein viertes Befestigungselement (86), das die untere Hautplatte mit dem unteren Flansch des vorderen C-förmigen Holms verbindet, wobei das vierte Befestigungselement nicht blind ist, so dass es zugänglich ist, wenn das primäre Strukturelement montiert ist.

4. Strukturelle Verbundtragfläche nach einem der Ansprüche 1 - 3, bei der die Vorderkanten-Hautplatte ohne Versatz an die obere Hautplatte angrenzt und bei der die Vorderkanten-Hautplatte ohne Versatz an die untere Hautplatte angrenzt.

5. Strukturelle Verbundtragfläche nach einem der Ansprüche 1 - 4, bei der die strukturelle Verbundtragfläche eine Hinterkantenklappe, ein Querruder, ein Flaperon, eine Luftbremse, ein Höhenruder, ein Vorflügel, ein Spoiler, ein Canard, ein Seitenruder und/oder ein Winglet ist.

6. Strukturelle Verbundtragfläche nach einem der Ansprüche 1 - 5, bei der das sekundäre Strukturelement eine Keilabdeckung umfasst.

7. Strukturelle Verbundtragfläche nach einem der Ansprüche 1 - 6, bei der
die untere Hautplatte ein unteres Vorderkantenende (78) und ein unteres Hinterkantenende (94) umfasst;
das untere Hinterkantenende dem unteren Vorderkantenende gegenüberliegt;
das untere Vorderkantenende mit dem vorderen C-förmigen Holm verbunden ist; und optional
das untere Hinterkantenende mit einem oberen Hinterkantenende (92) der oberen Hautplatte verbunden ist.

8. Strukturelle Verbundtragfläche nach Anspruch 7, bei der
ein integraler Z-Holm (100) in dem unteren Hinterkantenende ausgebildet ist, wobei der Z-Holm (100) eine Z-Holm-Versetzung (102) umfasst; und
der erste Abdeckungsendbereich der Abschlussabdeckung der Hinterkante über die Z-Holm-Versetzung in die untere Hautplatte eingelassen ist.

9. Strukturelle Verbundtragfläche nach einem der vorhergehenden Ansprüche, bei der der integrale Keil mit der oberen Hautplatte verklebt und/ oder über ein oder mehrere Befestigungselemente verbunden ist.

10. Strukturelle Verbundtragfläche nach einem der Ansprüche 1 - 6, bei der
die obere Hautplatte ein oberes Vorderkantenende (76) und ein oberes Hinterkantenende (92) umfasst;
das obere Hinterkantenende dem oberen Vorderkantenende gegenüberliegt;
das obere Vorderkantenende mit dem vorderen C-förmigen Holm verbunden ist; und optional
das obere Hinterkantenende mit einem integralen Keil (122) einer Hinterkantenabschlussabdeckung (104) verbunden ist.

11. Strukturelle Verbundtragfläche nach einem der Ansprüche 1 - 10, bei der der zweite Winkel spitz ist.

12. Strukturelle Verbundtragfläche nach einem der Ansprüche 1 - 11, bei der der vordere C-förmige Holm direkt mit der oberen Hautplatte und der unteren Hautplatte ohne Spleißbänder oder Mutternplatten verbunden ist.

13. Strukturelle Verbundtragfläche nach einem der Ansprüche 1 - 12, bei der das primäre Strukturelement ferner umfasst:
einen mittleren C-förmigen Holm (60), der mit der oberen Hautplatte und der unteren Hautplatte verbunden ist, wobei ein zweiter Kanal (64) des mittleren C-förmigen Holms der Vorderkante des strukturellen Verbundtragflügels zugewandt ist und wobei der mittlere C-förmige Holm hinter dem vorderen C-förmigen Holm angeordnet ist; und
einen hinteren C-förmigen Holm (62), der mit der oberen Hautplatte und der unteren Hautplatte verbunden ist, wobei ein dritter Kanal (70) des hinteren C-förmigen Holms der Vorderkante der strukturellen Verbundtragfläche zugewandt ist und wobei der hintere C-Kanal-Holm hinter dem mittleren C-Kanal-Holm angeordnet ist.

14. Flugzeug mit einer strukturellen Verbundtragfläche nach einem der Ansprüche 1 bis 13.

15. Verfahren zum Zusammenbauen einer strukturellen Verbundtragfläche (10), wobei das Verfahren umfasst:
Verbinden einer oberen Hautplatte (34) mit einem vorderen C-förmigen Holm (38), wobei sich die strukturelle Verbundtragfläche von einer Vorderkante (22) zu einer Hinterkante (24) erstreckt, wobei ein erster Kanal (46) des vorderen C-förmigen Holms der Vorderkante der strukturellen Verbundtragfläche zugewandt ist, wobei der vordere C-förmige Holm einen oberen Flansch (42), einen unteren Flansch (44) und einen langgestreckten Abschnitt (50) umfasst, der sich zwischen dem oberen Flansch und dem unteren Flansch erstreckt, wobei das Verbinden der oberen Hautplatte mit dem vorderen C-förmigen Holm das Verbinden der oberen Hautplatte mit dem oberen Flansch des vorderen C-förmigen Holms umfasst, und wobei der obere Flansch einen spitzen Winkel mit dem langgestreckten Abschnitt bildet;
Verbinden einer unteren Hautplatte (36) mit dem vorderen C-förmigen Holm, so dass ein Innenvolumen (40) zwischen der oberen Hautplatte und der unteren Hautplatte definiert wird, wobei die obere Hautplatte, die untere Hautplatte und der vordere C-förmige Holm zusammen mindestens einen Teil eines primären Strukturelements (26) des strukturellen Verbundtragflügels bilden;
Verbinden einer Vorderkanten-Hautplatte (54) mit dem vorderen C-förmigen Holm, wobei die Vorderkanten-Hautplatte die Vorderkante der strukturellen Verbundtragfläche definiert, wobei das Verbinden der Vorderkanten-Hautplatte das Verbinden eines ersten Endbereichs (56) der Vorderkanten-Hautplatte mit dem oberen Flansch des vorderen C-förmigen Holms umfasst, wobei das Verbinden der Vorderkanten-Hautplatte ferner das Verbinden eines zweiten Endbereichs (58) der Vorderkanten-Hautplatte mit dem unteren Flansch des vorderen C-förmigen Holms umfasst, wobei die Vorderkanten-Hautplatte eine abgerundete Form aufweist; und
Verbinden einer Hinterkanten-Abschlussabdeckung (104) mit der unteren Hautplatte, wobei ein erster Abdeckungsendbereich (118) der Hinterkanten-Abschlussabdeckung mit der unteren Hautplatte verbunden ist, der erste Abdeckungsendbereich der Hinterkanten-Abschlussabdeckung in die untere Hautplatte eingelassen ist und ein zweiter Abdeckungsendbereich (120) der Hinterkanten-Abschlussabdeckung einen integralen Keil (122) umfasst, der mit der oberen Hautplatte verbunden ist.

## Revendications

1. Profil aérodynamique composite structurel (10 présentant un bord d'attaque (22) et un bord de fuite (24), le profil aérodynamique composite structurel comprenant :
un élément structurel primaire (26) s'étendant d'une région de bord d'attaque (30) à une région de bord de fuite (32), dans lequel la région de bord d'attaque est adjacente au bord d'attaque du profil aérodynamique composite structurel, dans lequel l'élément structurel primaire comprend :
un panneau de peau supérieur (34) ;
un panneau de peau inférieur (36) ;
un volume interne (40) défini entre le panneau de peau supérieur et le panneau de peau inférieur ; et
un longeron avant profilé en C (38) comprenant une bride supérieure (42) couplée au panneau de peau supérieur, dans lequel le longeron avant profilé en C comprend en outre une bride inférieure (44) couplée au panneau de peau inférieur, dans lequel un premier canal (46) du longeron avant profilé en C fait face au bord d'attaque du profil aérodynamique composite structurel, dans lequel la bride supérieure forme un premier angle (48) avec une envergure allongée (50) du longeron avant profilé en C, dans lequel la bride inférieure forme un second angle (52) avec l'envergure allongée, et dans lequel le premier angle est aigu ;
un élément structurel secondaire (28) définissant le bord de fuite du profil aérodynamique composite structurel ;
un panneau de peau de bord d'attaque (54) définissant le bord d'attaque du profil aérodynamique composite structurel et positionné adjacent à la région de bord d'attaque de l'élément structurel primaire, dans lequel une première région d'extrémité (56) du panneau de peau de bord d'attaque est couplée à la bride supérieure du longeron avant profilé en C, dans lequel une seconde région d'extrémité (58) du panneau de peau de bord d'attaque est couplée à la bride inférieure du longeron avant profilé en C, et dans lequel le panneau de peau de bord d'attaque présente une forme de nez arrondi ; et
un couvercle de fermeture de bord de fuite (104), dans lequel :
une première région d'extrémité de couvercle (118) du couvercle de fermeture de bord de fuite est liée au panneau de peau inférieur, et la première région d'extrémité de couvercle du couvercle de fermeture de bord de fuite est en retrait dans le panneau de peau inférieur ; et
une seconde région d'extrémité de couvercle (120) du couvercle de fermeture de bord de fuite comprend une cale intégrée (122) couplée au panneau de peau supérieur.

2. Profil aérodynamique composite structurel selon la revendication 1, dans lequel le panneau de peau de bord d'attaque ne chevauche pas le panneau de peau supérieur sur la bride supérieure du longeron avant profilé en C, et dans lequel le panneau de peau de bord d'attaque ne chevauche pas le panneau de peau inférieur sur la bride inférieure du longeron avant profilé en C.

3. Profil aérodynamique composite structurel selon la revendication 1 ou 2, comprenant en outre:
une première fixation (80) couplant le panneau de peau de bord d'attaque à la bride supérieure du longeron avant profilé en C ;
une deuxième fixation (82) couplant le panneau de peau de bord d'attaque à la bride inférieure du longeron avant profilé en C ;
une troisième fixation (84) couplant le panneau de peau supérieur à la bride supérieure du longeron avant profilé en C, dans lequel la troisième fixation n'est pas aveugle, de telle sorte qu'elle est accessible lorsque l'élément structurel primaire est assemblé ; et
une quatrième fixation (86) couplant le panneau de peau inférieur à la bride inférieure du longeron avant profilé en C, dans lequel la quatrième fixation n'est pas aveugle, de telle sorte qu'elle est accessible lorsque l'élément structurel primaire est assemblé.

4. Profil aérodynamique composite structurel selon l'une quelconque des revendications 1 à 3, dans lequel le panneau de peau de bord d'attaque s'interface avec le panneau de peau supérieur sans aucun joint, et dans lequel le panneau de peau de bord d'attaque s'interface avec le panneau de revêtement inférieur sans aucun goujon.

5. Profil aérodynamique composite structurel selon l'une quelconque des revendications 1 à 4, dans lequel le profil aérodynamique composite structurel est un volet de bord de fuite, un aileron, un flaperon, un frein pneumatique, un élévateur, un bec de sécurité, un déporteur, un canard, une gouverne de direction et/ou une ailette de bout d'aile.

6. Profil aérodynamique composite structurel selon l'une quelconque des revendications 1 à 5, dans lequel l'élément structurel secondaire comprend une fermeture à cale.

7. Profil aérodynamique composite structurel selon l'une quelconque des revendications 1 à 6, dans lequel :
le panneau de peau inférieure comprend une extrémité de bord d'attaque inférieure (78) et une extrémité de bord de fuite inférieur (94) ;
l'extrémité de bord de fuite inférieure est opposée à l'extrémité de bord d'attaque inférieure ;
l'extrémité de bord d'attaque inférieure est couplée au longeron avant profilé en C ; et, facultativement,
l'extrémité de bord de fuite inférieure est couplée à une extrémité de bord de fuite supérieure (92) du panneau de peau supérieur.

8. Profil aérodynamique composite structurel selon la revendication 7, dans lequel :
un longeron en Z intégral (100) est formé dans l'extrémité de bord de fuite inférieure, le longeron en Z (100) comprend un goujon de longeron en Z (102) ; et
la première région d'extrémité de couvercle du couvercle de fermeture de bord de fuite est en retrait dans le panneau de peau inférieur via le goujon de longeron en Z.

9. Profil aérodynamique composite structurel selon l'une quelconque des revendications précédentes, dans lequel la cale intégrale est liée et/ou couplée par l'intermédiaire d'une ou plusieurs fixations au panneau de peau supérieur.

10. Profil aérodynamique composite structurel selon l'une quelconque des revendications 1 à 6, dans lequel :
le panneau de peau supérieur comprend une extrémité de bord d'attaque supérieure (76) et une extrémité de bord de fuite supérieure (92) ;
l'extrémité de bord de fuite supérieure est opposée à l'extrémité de bord d'attaque supérieure ;
l'extrémité de bord d'attaque supérieure est couplée au longeron avant profilé en C ; et, facultativement,
l'extrémité de bord de fuite supérieure est couplée à une cale intégrale (122) d'un couvercle de fermeture de bord de fuite (104).

11. Profil aérodynamique composite structurel selon l'une quelconque des revendications 1 à 10, dans lequel le second angle est aigu.

12. Profil aérodynamique composite structurel selon l'une quelconque des revendications 1 à 11, dans lequel le longeron avant profilé en C est directement couplé au panneau de peau supérieur et au panneau de peau inférieur sans sangle d'épissure ou plateau-écrou.

13. Profil aérodynamique composite structurel selon l'une quelconque des revendications 1 à 12, dans lequel l'élément structurel primaire comprend en outre :
un longeron médian profilé en C (60) couplé au panneau de peau supérieur et au panneau de peau inférieur, dans lequel un deuxième canal (64) du longeron médian profilé en C fait face au bord d'attaque du profil aérodynamique composite structurel, et dans lequel le longeron médian profilé en C est positionné à l'arrière du longeron avant profilé en C ; et
un longeron arrière profilé en C (62) couplé au panneau de peau supérieur et au panneau de peau inférieur, dans lequel un troisième canal (70) du longeron arrière profilé en C fait face au bord d'attaque du profil aérodynamique composite structurel, et dans lequel le longeron arrière profilé en C est positionné à l'arrière du longeron médian profilé en C.

14. Aéronef comprenant le profil aérodynamique composite structurel selon l'une quelconque des revendications 1 à 13.

15. Procédé d'assemblage d'un profil aérodynamique composite structurel (10), le procédé comprenant les étapes consistant à :
coupler un panneau de peau supérieur (34) à un longeron avant profilé en C (38), dans lequel le profil aérodynamique composite structurel s'étend d'un bord d'attaque (22) à un bord de fuite (24), dans lequel un premier canal (46) du longeron avant profilé en C fait face au bord d'attaque du profil aérodynamique composite structurel, dans lequel le longeron avant profilé en C comprend une bride supérieure (42), une bride inférieure (44) et une envergure allongée (50) s'étendant entre la bride supérieure et la bride inférieure, dans lequel le couplage du panneau de peau supérieur au longeron avant profilé en C comprend le couplage du panneau de peau supérieur à la bride supérieure du longeron avant profilé en C, et dans lequel la bride supérieure forme un angle aigu avec l'envergure allongée ;
coupler un panneau de peau inférieur (36) au longeron avant profilé en C de telle sorte qu'un volume interne (40) soit défini entre le panneau de peau supérieur et le panneau de peau inférieur, dans lequel le panneau de peau supérieur, le panneau de peau inférieur et le longeron avant profilé en C forment ensemble au moins une partie d'un élément structurel primaire (26) du profil aérodynamique composite structurel ;
coupler un panneau de peau de bord d'attaque (54) au longeron avant profilé en C, dans lequel le panneau de peau de bord d'attaque définit le bord d'attaque du profil aérodynamique composite structurel, dans lequel le couplage du panneau de peau de bord d'attaque comprend le couplage d'une première région d'extrémité (56) du panneau de peau de bord d'attaque à la bride supérieure du longeron avant profilé en C, dans lequel le couplage du panneau de peau de bord d'attaque comprend en outre le couplage d'une seconde région d'extrémité (58) du panneau de peau de bord d'attaque à la bride inférieure du longeron avant profilé en C, dans lequel le panneau de peau de bord d'attaque présente une forme de nez arrondi ; et
coupler un couvercle de fermeture de bord de fuite (104) au panneau de peau inférieur, dans lequel une première région d'extrémité de couvercle (118) du couvercle de fermeture de bord de fuite est liée au panneau de peau inférieur, la première région d'extrémité de couvercle du couvercle de fermeture de bord de fuite est en retrait dans le panneau de peau inférieur, et une seconde région d'extrémité de couvercle (120) du couvercle de fermeture de bord de fuite comprend une cale intégrale (122) couplée au panneau de peau supérieur.
